# EUROPEAN PATENT APPLICATION

(11) **EP 2 065 341 A1**
(43) Date of publication of application: **03.06.2009**
(21) Application number: 07807613.0
(22) Date of filing: 20.09.2007
(51) Int. Cl.: C01B 31/02, B01J 23/88, C01B 33/24, C01G 23/00, C08K 9/02, C08L 101/00

(54) **METAL OXIDE PARTICLES CARRYING CARBON NANOTUBES AND GRANULAR CARBON NANOTUBES**

(30) Priority: 22.09.2006 JP 2006257656
(71) Applicant: Otsuka Chemical Co., Ltd., Osaka-shi, Osaka 540-0021 (JP)
(72) Inventor: GOTO, Toshiki, Tokushima-city Tokushima 771-0193 (JP); TANI, Masato, Tokushima-city Tokushima 771-0193 (JP)
(74) Representative: TER MEER - STEINMEISTER & PARTNER GbR
(86) International application number: PCT/JP2007/068249
(87) International publication number: WO 2008/035730

(57) **Abstract**

The invention provides novel metal oxide particles on which carbon nanotubes are supported. Needle- or flake-like crystalline metal oxide particles **characterized in that** carbon nanotubes grown parallel to each other in the direction nearly perpendicular to the surface of each particle are supported on the surfaces of the particles and that the carbon nanotubes supported on the particles are 1 to 500µm in length in the direction nearly perpendicular to the surface of each particle.

## Description

### Technical Field

The present invention relates to metal oxide particles carrying carbon nanotubes and granular carbon nanotubes.

### Background Art

Recent years, carbon nanotubes are actively researched and developed.
Patent Document 1 proposes a method of irradiating ion beams to a part of the surface of a carbonaceous solid such as graphite, fullerene carbon, amorphous carbon and the like under high vacuum to generate carbon nanotubes on the irradiated surface. Patent Document 1 investigates an electronic heat source element using a carbonaceous material having carbon nanotubes formed on a part of the carbonaceous solid surface.

Patent Document 2 proposes to allow inorganic particles to carry carbon nanotubes on the surface thereof. Patent Document 2 examines to blend inorganic particles carrying carbon nanotubes in resin.
Patent Document 1: JP-A No. 9-221309
Patent Document 2: WO 2006/082829

### Disclosure of the Invention

However, in many cases, it is difficult to perform the synthesis in large quantity, and to draw the characteristics thereof, because carbon nanotubes entwine with one another to form agglomerated particles.

An object of the present invention is to provide novel metal oxide particles carrying carbon nanotubes, and granular carbon nanotubes using the same.

With the view of the above current situations, the present inventors studied hard to find a method for allowing metal oxide particles to carry and form carbon nanotubes having regularity on the surface thereof.

That is, the metal oxide particles carrying carbon nanotube of the invention are **characterized in that** carbon nanotubes are grown on the surface of an acicular or tabular crystalline metal oxide particle in parallel in the approximately vertical direction to the surface.

In the invention, the carried carbon nanotubes preferably have a length in the range from 1 µm to 500 µm in the approximately vertical direction relative to the surface of the metal oxide particle.

The metal oxide particles are preferably made of alkali earth metal silicate, alkali earth metal titanate, or alkali titanate. Examples of the alkali earth metal silicate include Wollastonite.

The manufacturing method according to a first aspect of the invention is a method capable of manufacturing the metal oxide particles carrying carbon nanotubes of the invention, which are characterized by including the processes of contacting a solution containing a metal salt to be a catalyst for generating carbon nanotubes to acicular or tabular crystalline metal oxide particles to adhere the catalyst to the surface of the metal oxide particles, and contacting hydrocarbon and/or carbon monoxide to the metal oxide particles to which the catalyst has been adhered while heating the particles to 500°C to 1000°C to generate and grow carbon nanotubes on the surface of the metal oxide particles.

In the manufacturing method according to the first aspect of the invention, it is preferable that metal oxide particles are heated by the combustion of a gas containing hydrocarbon or carbon monoxide and oxygen, and that the particles are contacted with hydrocarbon and/or carbon monoxide at the same time to generate and grow carbon nanotubes on the surface of the metal oxide particles.

In the manufacturing method according to the first aspect of the invention, the solution, which contains metal ions to be a catalyst for generating carbon nanotubes, contains at least one element of Cr, Mn, Fe, Co, Ni, Cu, Zn, In, Sn, Al and Pt, and Mo element, wherein it preferably contains at least one element of Cr, Mn, Fe, Co, Ni, Cu, Zn, In, Sn, Al and Pt in the range from 0.1 to 1000 mol relative to 1 mol of Mo element. When the content is less than 0.1 mol, although the manufacturing may be possible, occasionally economical efficiency is poor. When the content exceeds 1000 mol, occasionally the amount of carbon nanotubes carried on the metal oxide particle is extremely reduced and the regularity is also diluted.

The granular carbon nanotubes of the invention are **characterized in that** the metal oxide particles carrying carbon nanotubes of the invention are made into a granular form using no binder.
Since the granular carbon nanotubes of the invention contain no binder or the like, it can easily be dispersed in a solvent such as water or in molten resin and the like.

The granular carbon nanotubes of the invention can have a considerably reduced specific volume of around 1/20 to 1/2 as compared with that of the metal oxide particles carrying carbon nanotubes before being made into a granular form. Consequently, they have advantages in handling in transportation and the like, and can reduce the generation of powder dust when being used.

The manufacturing method according to a second aspect of the invention is a method capable of manufacturing the granular carbon nanotubes of the invention, and is characterized by including processes of preparing a water-containing cake of the metal oxide particles carrying carbon nanotubes of the invention, segmentalizing the water-containing cake by applying shear force to form granular materials, and drying the granular materials.
In the manufacturing method according to the second aspect of the invention, the water-containing cake is prepared by using water while using no binder, and, from the water-containing cake, the granular material is manufactured. Consequently, the granular carbon nanotubes can be manufactured easily and simply.

According to the invention, it is possible to provide novel metal oxide particles carrying carbon nanotubes, in which acicular or tabular crystalline metal oxide particles carry carbon nanotubes grown on the surface thereof in parallel in the approximately vertical direction to the surface.

By blending the metal oxide particles carrying carbon nanotubes of the invention to resin and the like, it is possible to enhance the bending strength and impact strength, and to give excellent reinforcement properties to resin and the like.

In addition, the metal oxide particles carrying carbon nanotubes of the invention have excellent electroconductivity. And, by blending it to resin and the like, electroconductivity can be given to the resin and the like.

The granular carbon nanotubes of the invention do not contain a binder, and, therefore, they can easily be dispersed in a solvent such as water, resin and the like.
Further, the granular carbon nanotubes of the invention have a considerably reduced specific volume as compared with that before being made into a granular form, and, therefore, they have advantages in transportation and can reduce the generation of powder dust when being used to be handled vary easily.

### Brief Description of the Drawings

Fig. 1 is a schematic view of a manufacturing apparatus based on a combustion method, which was used for generating Wollastonite carrying carbon nanotubes in an Example according to the present invention.
Fig. 2 is a scanning electron microscopic picture (a) and a transmission electron microscopic picture (b) showing Wollastonite carrying carbon nanotubes obtained in an Example according to the invention.
Fig. 3 is an energy dispersive X-ray analysis picture showing Wollastonite carrying carbon nanotubes obtained in an Example according to the invention.
Fig. 4 is an energy dispersive X-ray analysis picture showing Wollastonite carrying carbon nanotubes obtained in an Example according to the invention.
Fig. 5 is a scanning electron microscopic picture showing Wollastonite carrying carbon nanotubes obtained in a Comparative Example.
Fig. 6 is a chart of thermogravimetric-differential thermal analysis measurement of Wollastonite carrying carbon nanotubes obtained in an Example according to the invention.
Fig. 7 is a chart of thermogravimetric-differential thermal analysis measurement of Wollastonite carrying carbon nanotubes obtained in a Comparative Example.
Fig. 8 is a chart of laser Raman analysis measurement of Wollastonite carrying carbon nanotubes obtained in an Example according to the invention.
Fig. 9 is an X-ray diffraction chart of Wollastonite carrying carbon nanotubes obtained in an Example according to the invention.
Fig. 10 is a scanning electron microscopic picture showing a granular carbon nanotube obtained in an Example according to the invention.
Fig. 11 is a perspective view showing a slicer used in Examples of the invention.
Fig. 12 is a perspective view showing a rotary shaft and cutter blades used in the slicer shown in Fig. 11.

- 1: vessel made of stainless steel mesh
- 2, 3: stainless steel plate through which holes are formed
- 4: burner
- 5: flame
- 6: stainless steel pipe
- 10: slicer
- 11: vessel
- 12: rotary shaft
- 13: cutter blade

### Best Mode for Carrying Out the Invention

The crystalline metal oxide particle used in the invention is a fibrous or tabular crystalline metal oxide particle, including, for example, particles of alkali earth metal silicate, alkali earth metal titanate, alkali titanate, and the like. Examples of fibrous or tabular alkali earth metal silicates include calcium silicate, magnesium silicate, aluminum magnesium silicate, strontium silicate, barium silicate, and the like. Examples of fibrous or tabular alkali earth metal titanates include magnesium titanate, calcium titanate, strontium titanate, barium titanate, and the like. Examples of fibrous or tabular alkali titanates include potassium titanate, sodium titanate, lithium titanate, cesium titanate, and the like.

No particular limitation is imposed on the particle diameter of the crystalline metal oxide particles, and, in the case of fibrous materials, those falling within the range from 50 nm to 10 µm for the fiber diameter and 1 µm to 1000 µm for the fiber length are mentioned. In the case of tabular materials, those falling within the range from 1 µm to 1000 µm for an average particle diameter and 50 nm to 100 µm for the thickness are mentioned.

As a method of allowing the metal oxide particles to carry carbon nanotubes on the surface thereof, a method, in which a catalyst for generating carbon nanotubes is carried on the surface of the metal oxide particles and the carbon nanotubes are generated and grown from the surface of the metal oxide particles using the carried catalyst, is mentioned.

As the catalyst to be carried on the surface of the metal oxide particles, a compound containing Mo, and at least one element of Cr, Mn, Fe, Co, Ni, Cu, Zn, In, Sn, Al and Pt, including, for example, single metal, metal oxide, metal hydroxide, metal carbonate and the like can be used. Among them, oxides or hydroxides of Mo and at least one kind of Fe, Ni and Co are easily carried and are excellent catalysts, and can effectively form carbon nanotubes on the surface.

As a method for allowing the surface of the metal oxide particle to carry the aforementioned catalyst, there are sputtering, vacuum evaporation, CVD, plating and the like, but, as the simplest and practical method, there is a method of immersing the metal oxide particles in a solution of a catalyst metal compound.

Only by simple immersion in the solution, separation and drying or burning, the catalyst metal is carried, but, as a method of allowing the catalyst metal to be carried more surly, there is such method as immersing metal oxide particles in a catalyst compound solution, when the metal oxide particles has an alkali metal or alkali earth metal element, to substitute the alkali metal element or alkaline-earth metal element by the catalyst metal to efficiently fix the catalyst metal to the surface of these particles. On this occasion, the catalyst compound solution may be heated. In order to form carbon nanotubes using the metal compound as the catalyst, the compound must be carried as fine particles, and, a method of immersing metal oxide particles in a colloid sol produced by utilizing the hydrolysis and the like of the catalyst metal compound is effective. For example, Wollastonite is immersed in an aqueous solution of nickel nitrate and ammonium molybdate to carry a nickel and molybdenum catalyst. In this case, Ca on the Wollastonite surface is substituted by a nickel ion and a molybdate ion in the solution to be carried.

On the other hand, an iron oxide fine particle catalyst may be carried by dropping an aqueous solution of iron chloride and ammonium molybdate to boiling water to form a fine particle sol of iron hydroxide or iron oxide and molybdenum hydroxide or molybdenum oxide, and by immersing the metal oxide particles in the sol and then performing separation and drying or burning. This method makes the carrying possible when no base exists in the surface of metal oxide particles, and can be applied to a wide variety of metal oxide particles.

The amount of a catalyst to be carried is suitably selected in accordance with the amount of carbon nanotubes to be grown. The catalyst is carried so that at least one element of Cr, Mn, Fe, Co, Ni, Cu, Zn, In, Sn, Al and Pt is contained preferably in 0.1 to 1000 mol relative to 1 mol of Mo element, and more preferably in 1 to 100 mol.

As a method for generating and growing carbon nanotubes on the surface of metal oxide particles carrying the catalyst, a CVD method is mentioned. As the CVD method used in this case, in addition to a method based on a mixed gas containing a hydrocarbon gas such as ethane, ethylene or acetylene and an inert gas such as nitrogen, helium or argon which are generally used for manufacturing carbon nanotubes, a CVD method, in which a hydrocarbon compound that is liquid at ordinary temperature such as ethanol and toluene or a hydrocarbon that is solid at ordinary temperature such as polystyrene are used, is also usable. As a method for synthesizing a large amount of carbon nanotubes, methods using these liquid or solid hydrocarbons are rather desirable. For example, by mixing Wollastonite carrying a catalyst, which carries a nickel oxide and molybdenum oxide catalyst, and polystyrene resin powder and then heating the mixture to 700°C under nitrogen atmosphere, metal oxide particles carrying carbon nanotubes can be synthesized. At this time, the mixing ratio of the Wollastonite and polystyrene is practically 0.01 or more relative to 1 for the Wollastonite, and desirably from 0.1 to 10 from the standpoint of the efficiency, and the CVD temperature is desirably from 500 to 1000°C.

Further, carbon nanotubes may be generated on the surface of metal oxide particles by imperfectly combusting hydrocarbon gas and contacting metal oxide particles carrying the catalyst to the flame so as to heat the metal oxide particles carrying the catalyst by the combustion heat while utilizing the combustion gas as a carbon source. For example, carbon nanotubes can be generated on the surface by preparing Wollastonite carrying the catalyst, which carries a nickel oxide and molybdenum oxide catalyst, and then contacting the same to flame created by combusting a mixed gas of air/ethylene having a volume ratio of less than 10, preferably less than 7 with a gas burner for 1 minute or more, preferably around 15 minutes. The temperature on this occasion is preferably from 500 to 900°C, and more preferably from 600 to 800°C. When terminating the contact with the metal oxide particles after the generation of carbon nanotubes, carbon nanotubes are burned if those generated on the surface are contacted with air while keeping high temperatures. Therefore, it is desirable to cool them down to 500°C or less in a state where air is blocked, or by being contacted with an inert gas such as nitrogen, argon and helium.

The manufacturing method of the invention is a method in which carbon nanotubes are generated on the surface of crystalline metal oxide particles carrying the catalyst by the aforementioned CVD method or combustion method, which is characterized by including processes of contacting crystalline metal oxide particles with a metal compound to be the catalyst generating carbon nanotubes to adhere the catalyst on the surface of the crystalline metal oxide particles, contacting the crystalline metal oxide particles adhered with the catalyst, while being heated to 500 to 1000°C, with hydrocarbon and/or carbon monoxide to generate carbon nanotubes on the surface of the crystalline metal oxide particles, and cooling the system down to 500°C or less after the generation of the carbon nanotubes.

When using the CVD method, a polymer may be used as a carbon source.
When generating carbon nanotubes by the combustion method, the metal oxide particles are heated by the combustion reaction of a gas containing hydrocarbon and oxygen, and, at the same time, are contacted with hydrocarbon and/or carbon monoxide, to generate carbon nanotubes.

In the invention, the length of carbon nanotubes being carried in the approximately vertical direction relative to the surface of the metal oxide is preferably from 1 µm to 500 µm, and more preferably from 5 µm to 100 µm.

In the invention, an adhering amount of carbon nanotube to be carried and adhered to the surface of the metal oxide particles can be controlled by controlling the amount of the catalyst to be carried, the amount of the inert gas to be supplied, the kind and amount of the hydrocarbon, the reaction temperature and time, and the like. Also in the case of the combustion method, it can be controlled by controlling the amount of the catalyst to be carried, the amount of the combustion gas, the air-fuel ratio, the reaction temperature and time, and the like.

A too small carrying amount of carbon nanotubes reduces an effect on reinforcing resins and the like and an effect on giving electroconductivity to resins, and a too large carrying amount tends to result in dispersion defect. Accordingly, the adhering amount of the carbon nanotubes is preferably around from 0.1 to 100 relative to the metal oxide particles in ratio by weight, and when the ratio is from 0.5 to 50, they are effectively generated and can also give sufficient reinforcement effect.

The adhering amount of the carbon nanotubes can be determined, for example, from thermal analysis and the like.
It is determined from loss on heating up to around 800°C in the thermal analysis.

In the invention, examples of metal oxide particles on which carbon nanotubes are carried include fibrous or tabular potassium titanate and Wollastonite, as described above. Other examples include mica, talc, glass flake, tabular hydrotalcite, tabular boehmite, tabular alumina, glass fiber, ceramic fiber, fibrous aluminum borate, fibrous titanium oxide, and the like, but the invention is not limited to them.

No particular limitation is imposed on a method for blending the metal oxide particles carrying carbon nanotubes of the invention to resin and the like. Here, although the metal oxide particles carrying carbon nanotubes of the invention can be dispersed relatively easily, generally carbon nanotubes are hardly dispersed in resins and the like, and a following method can be used.

That is, it is preferable to manufacture a pre-mixture formed by dispersing the metal oxide particles carrying carbon nanotubes of the invention in a high concentration, and to mix the pre-mixture to resin and the like to blend the metal oxide particles carrying carbon nanotubes to resin and the like. The pre-mixture can be manufactured, for example, by previously dispersing the metal oxide particles carrying carbon nanotubes in a solvent capable of dissolving a resin to be blended by such method as applying ultrasonic vibration, adding the resin in the dispersion liquid to dissolve the resin, and then drying the product to remove the solvent. By mixing the pre-mixture produced as above in resin, a resin composition in which the metal oxide particles carrying carbon nanotubes of the invention are satisfactorily dispersed can be obtained.

The resin composition of a first aspect of the invention is characterized by containing the metal oxide particles carrying carbon nanotubes of the invention.

The content of the metal oxide particles carrying carbon nanotubes in resin is preferably in the range from 1 to 99% by weight, and more preferably in the range from 5 to 50% by weight.

By blending the metal oxide particles carrying carbon nanotubes of the invention in resin and the like, excellent reinforcement properties can be obtained.

The metal oxide particles carrying carbon nanotubes of the invention is formed by allowing carbon nanotubes having a regularity to be carried on the surface of fine oxide particles, which have, consequently, excellent orientation property and air permeability as compared with carbon nanotubes agglomerated in a furball shape. Therefore, it can be applied to additives for resin, and electrode agents for batteries, capacitors and the like.

The resin composition of a second aspect of the invention is characterized by containing the granular carbon nanotubes of the invention.
The content of the granular carbon nanotubes in resin is preferably in the range from 1 to 99% by weight, and more preferably in the range from 5 to 50% by weight.

By blending the granular carbon nanotubes of the invention to resin and the like, excellent reinforcement properties can be obtained, in the same manner as that in the case for the metal oxide particles carrying carbon nanotubes of the invention.
Further, by blending the granular carbon nanotubes of the invention to resin and the like, satisfactory electroconductivity can be given to resin and the like.

### Examples

Hereinafter, the invention will be described more specifically based on Examples, but the invention is not limited by these Examples. The invention may suitably be changed in the range that does not change the essentials thereof.

### (Example 1)

To 10 g of Wollastonite (fiber diameter: 5 µm, fiber length: 50 µm), 500 ml of water was added, which was sufficiently stirred to produce a dispersion slurry.

To 500 ml of water, 5.4 g of nickel nitrate (guaranteed reagent) was added and dissolved. To the solution, 0.7 g of ammonium molybdate (guaranteed reagent) was added and dissolved. The solution (catalyst solution) was added to the slurry.

The slurry was stirred for 1 hour, left at rest, and then washed with water three times by a decantation method, and filtrated.

The obtained cake was dried at 120°C for 1 hour, crushed in a mortar to give Wollastonite carrying the catalyst.

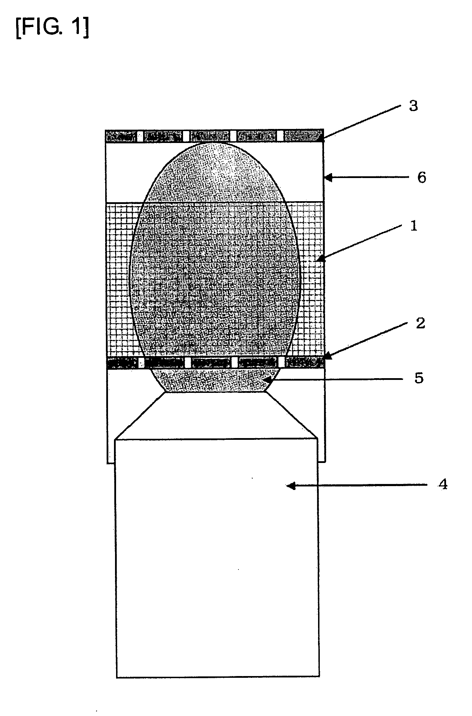

0.5 g of the obtained Wollastonite carrying the catalyst was put in a vessel 1 made of stainless steel mesh in an apparatus shown in Fig. 1 to generate carbon nanotubes (CNTs) on the surface of the Wollastonite. The upper face, lower face and surrounding side face of the vessel 1 were formed of stainless steel mesh, and stainless steel plates 2 and 3 with holes were arranged to the lower side and upper side of the vessel 1, respectively. Under the stainless steel plate 2, a burner 4 was arranged to expose the Wollastonite carrying the catalyst in the vessel 1 to flame 5 from the burner 4.

The vessel 1, stainless steel plates 2 and 3 were inserted in a stainless steel pipe 6.
To the burner 4, ethylene 1.75 L/min and air 10 L/min were fed to expose the Wollastonite carrying the catalyst to the flame 5 from the burner 4 for 10 minutes, and then the gas fed to the burner 4 was replaced by nitrogen gas 10 L/min to cool the system for 2 minutes. 2.5 g of a product was obtained. The specific volume thereof was 48 ml/g.

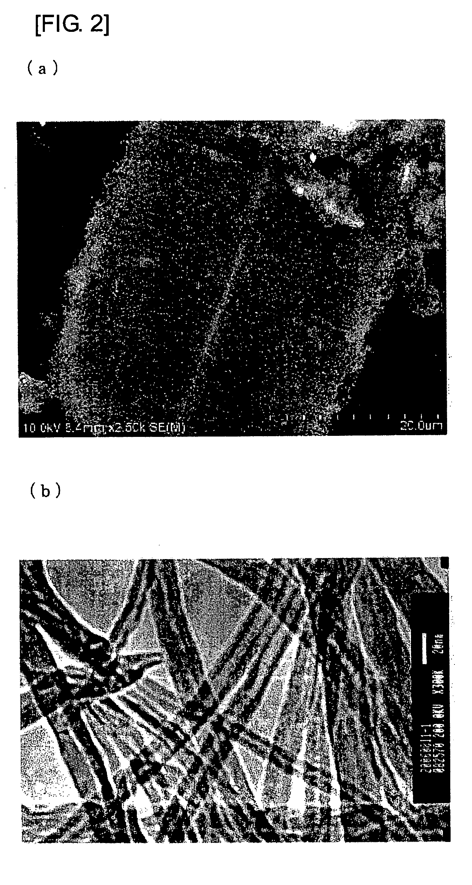

The obtained product was observed using a scanning electron microscope (s-4800; manufactured by Hitachi) and using a transmission electron microscope (JEM-2010; manufactured by JEOL). Fig. 2 includes a scanning electron microscopic picture (a) and a transmission electron microscopic picture (b) showing the obtained product.

Fig. 2 (a) is a scanning electron microscopic image (x 2500), from which it is observed that carbon nanotubes (CNTs) are carried on the surface of the Wollastonite in such state as being grown in parallel with one another in the approximately vertical direction to the surface. Further, the carbon nanotubes grew in symmetric directions while sandwiching the Wollastonite, and the whole construction was planner. As the result of the observation with a scanning electron microscope, lengths of carbon nanotubes on the measured Wollastonite surface in the approximately vertical direction relative to the Wollastonite surface was from 5 to 25 µm.

Fig. 2(b) is a transmission electron microscopic image (x 300,000), from which it is understood that carbon nanotubes having a hollow construction are generated and carried on the surface of the Wollastonite.

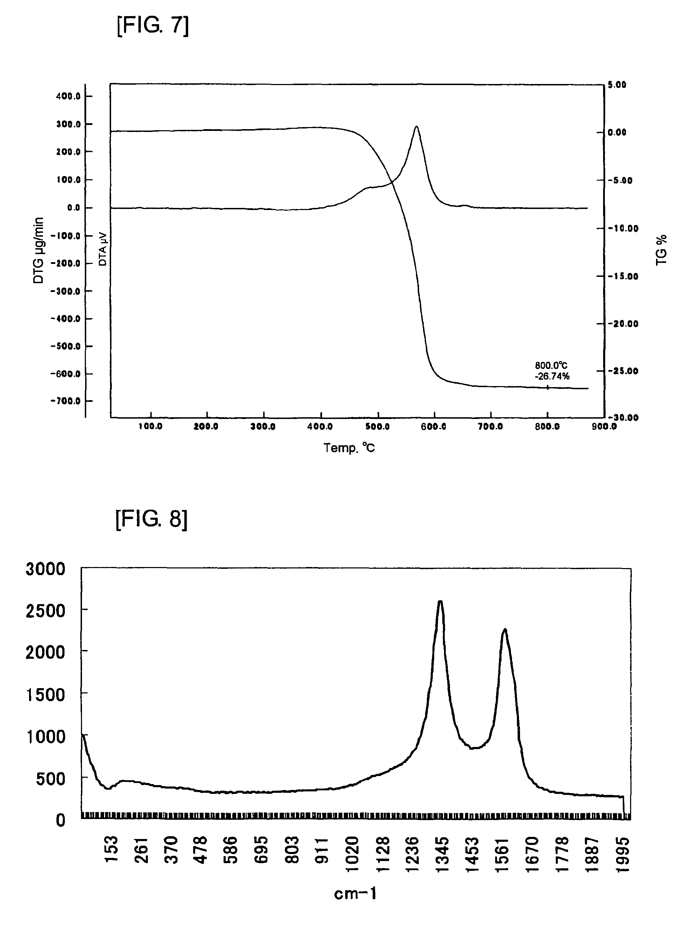

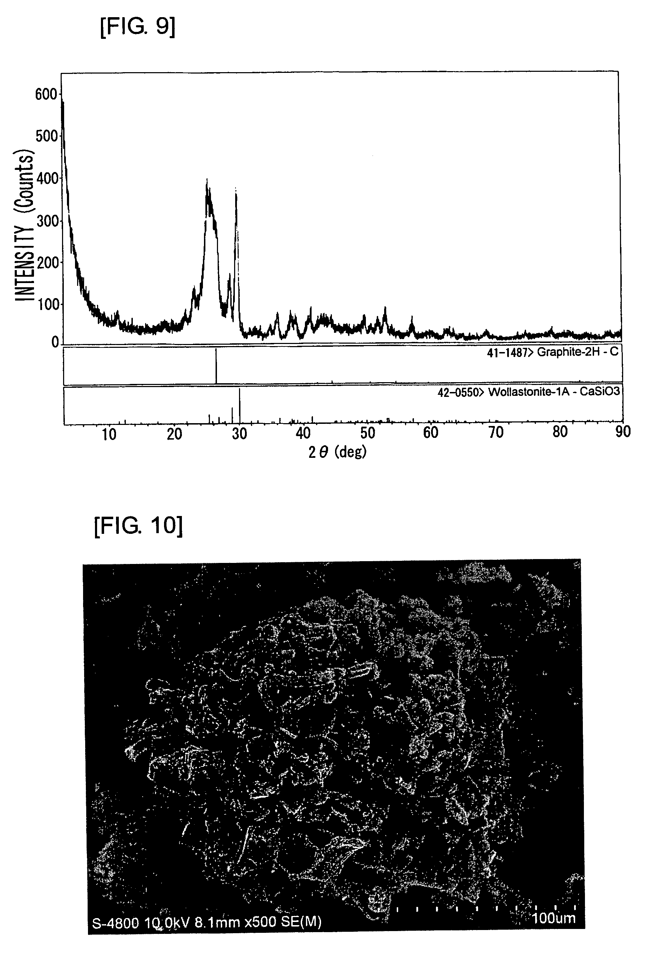

Fig. 8 is an analysis result by a laser Raman spectroscopic analyzer, and Fig. 9 is a chart of X-ray diffraction. From these analysis results, it is understood that the carried carbon nanotubes include a graphite phase and an amorphous phase.

Next, using an energy dispersive X-ray analyzer, the obtained Wollastonite carrying carbon nanotubes was analyzed.

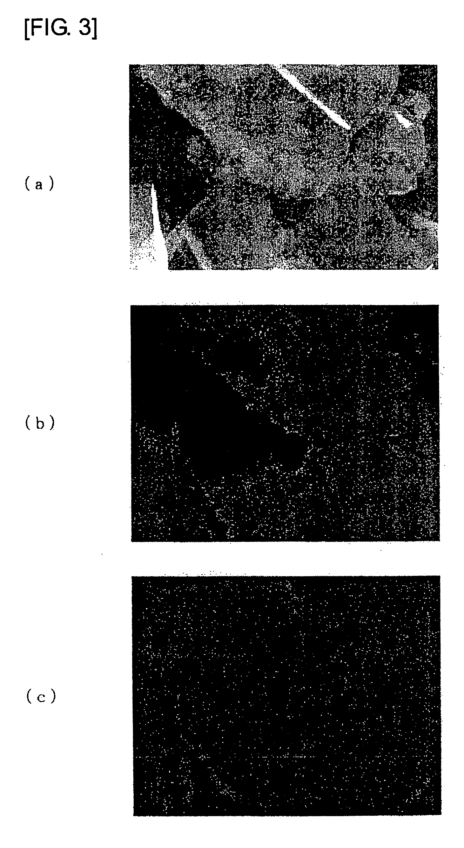

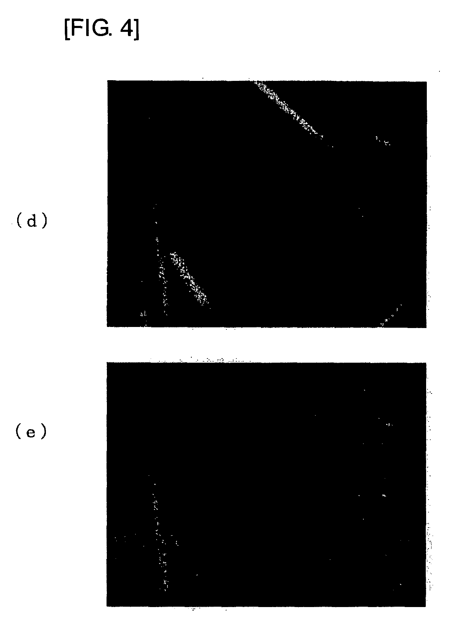

Figs. 3 and 4 show the analysis results.

Fig. 3 (a) shows the observed Wollastonite carrying carbon nanotubes, Fig. 3(b) shows the result of a marking analysis of C (carbon), Fig. 3 (c) shows the result of a marking analysis of Si (silicon), Fig. 4(d) shows the result of a marking analysis of Ca (calcium), and Fig. 4(e) shows the result of a marking analysis of O (oxygen).

As is clear from Figs. 3 and 4, it is understood that the white portion lying at the center of the Wollastonite carrying carbon nanotubes is Wollastonite, that carbon nanotubes grow on both sides of the Wollastonite so as to sandwich it, and that the carbon nanotubes grow in parallel in the approximately vertical direction to the Wollastonite.

### (Comparative Example 1)

To 10 g of the same Wollastonite as that described above, 500 ml of water was added, which was sufficiently stirred to produce a dispersion slurry.

To 500 ml of water, 14.5 g of nickel nitrate (the same kind as above-described one) was dissolved. This liquid (catalyst liquid) was added to the slurry.

The slurry was stirred for 1 hour, left at rest, and then washed with water three times by a decantation method, and filtrated.

The obtained cake was dried at 120°C for 1 hour, crushed in a mortar to give Wollastonite carrying the catalyst.

In the same way as in Example 1, 0.5 g of the obtained Wollastonite carrying the catalyst was put in the vessel 1 of the apparatus shown in Fig. 1, which was exposed to the flame 5 from the burner 4, to which ethylene 1.75 L/min and air 10 L/min were fed, for 10 minutes, and then the gas was replaced by nitrogen gas 200 L/min to cool the system for 2 minutes. 0.6 g of a product was obtained. The specific volume thereof was 2 ml/g.

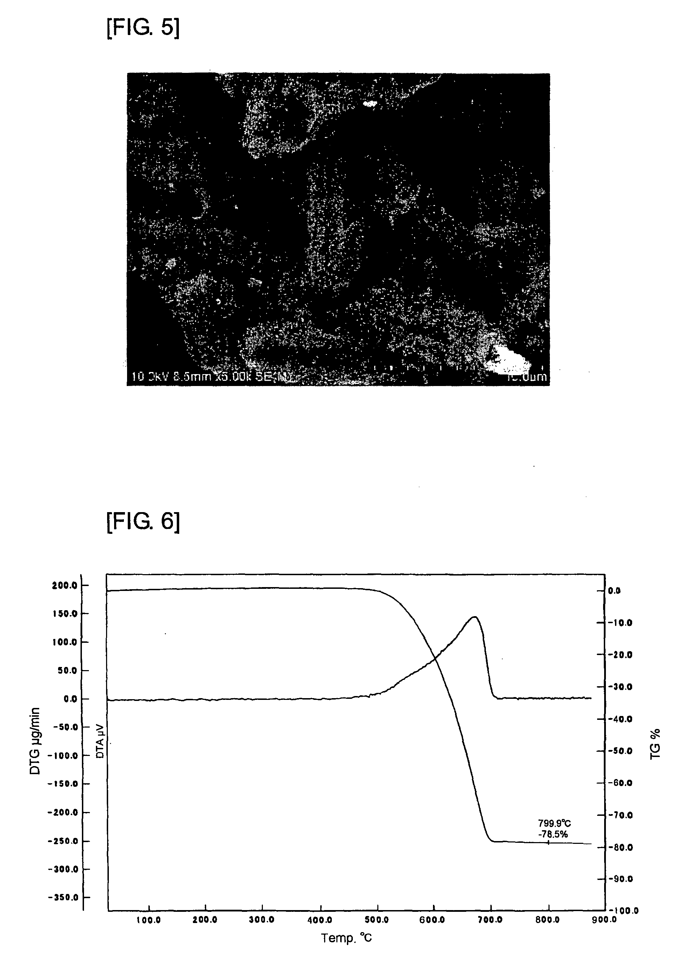

The obtained product was observed with a scanning electron microscope in the same manner as described above. As shown in Fig. 5, it was observed that carbon nanotubes were carried while growing in random directions relative to the surface of the Wollastonite. Further, carbon nanotubes had a thin and bending shape.

### <Thermal analysis test>

For Wollastonites carrying carbon nanotubes in Example 1 and Comparative Example 1, a thermal analysis was performed using a thermal analyzer (EXSTAR6000 TG/DTA6300; manufactured by Seiko Instruments). Figs. 6 and 7 show the results. Fig. 6 shows the result of the thermal analysis for the carbon nanotubes in Example 1, and Fig. 7 shows the result of the thermal analysis for the carbon nanotubes in Comparative Example 1.

From these results, it is understood that the carbon nanotubes in the product in Example 1 are about 80% by weight and those in Comparative Example 1 are about 30% by weight. Further, it is understood that the carbon nanotubes in Example 1 are thermally more stable.

### (Example 2)

A product was obtained in a manner substantially similar to that in Example 1, except for using 2.7 g of nickel nitrate and 0.35 g of ammonium molybdate. 2.0 g of the product was obtained, which had a specific volume of 23 ml/g.

The product was observed with a scanning electron microscope (the same as above), and it was observed that CNTs (carbon nanotubes) grown in the approximately vertical direction relative to the fiber of the Wollastonite were carried, as is the case for Example 1.

### (Example 3)

A product was obtained in a manner substantially similar to that in Example 1, except for using 1.35 g of nickel nitrate and 0.18 g of ammonium molybdate. 1.6 g of the product was obtained, which had a specific volume of 24 ml/g.

The product was observed with a scanning electron microscope (the same as above), and it was observed that CNTs grown in the approximately vertical direction relative to the fiber of the Wollastonite were carried, as is the case for Example 1.

### (Example 4)

A product was obtained in a manner substantially similar to that in Example 1, except for using 0.68 g of nickel nitrate and 0.09 g of ammonium molybdate. 1.0 g of the product was obtained, which had a specific volume of 18 ml/g.

The product was observed with a scanning electron microscope (the same as above), and it was observed that CNTs grown in the approximately vertical direction relative to the fiber of the Wollastonite were carried, as is the case for Example 1.

### (Example 5)

A product was obtained in a manner substantially similar to that in Example 1, except for using 2.7 g of nickel nitrate and 0.18 g of ammonium molybdate. 1.2 g of the product was obtained, which had a specific volume of 21 ml/g.

The product was observed with a scanning electron microscope (the same as above), and it was observed that CNTs grown in the approximately vertical direction relative to the fiber of the Wollastonite were carried, as is the case for Example 1.

### (Example 6)

A product was obtained in a manner substantially similar to that in Example 1, except for using 2.7 g of nickel nitrate and 0.09 g of ammonium molybdate. 0.8 g of the product was obtained, which had a specific volume of 8 ml/g.

The product was observed with a scanning electron microscope (the same as above), and it was observed that CNTs grown in the approximately vertical direction relative to the fiber of the Wollastonite were carried, as is the case for Example 1.

### (Example 7)

6 g of Wollastonite carrying carbon nanotubes synthesized in the same manner as in Example 1 and 54 g of polycarbonate resin (E-2000; manufactured by Mitsubishi Engineering-Plastics) were mixed with a compact size mixer, and then kneaded with a compact size kneader (laboplast mill; manufactured by Toyo Engineering) at 260°C and at 50 rpm for 10 minutes to give a massive polycarbonate composite material. The material was pulverized into around from 5 to 10 mm to produce respective five test pieces for a shock resistance test by an injection molding machine and a bending strength test.

Using these test pieces, the bending strength and Izod impact strength were measured with an autograph and an Izod impact resistance measuring apparatus. Table 1 shows the measurement results.

### (Comparative Example 2)

A polycarbonate composite material was produced by way of trial in a manner substantially similar to that in Example 7, except for replacing the Wollastonite carrying carbon nanotubes by 6 g of Wollastonite carrying no carbon nanotube, and the bending strength and the Izod impact strength were measured. Table 1 shows the measurement results.

### (Comparative Example 3)

A polycarbonate composite material was produced by way of trial in a manner substantially similar to that in Example 7, except for using 4.2 g of carbon nanotube (manufactured by CNT Co., ltd.; South Korea) and 1.8 g of Wollastonite carrying no carbon nanotube in place of the Wollastonite carrying carbon nanotubes, and the bending strength and the Izod impact strength were measured. Table 1 shows the measurement results.

**Table 1**

| | Ex. 7 | Comp. Ex. 2 | Comp. Ex. 3 |
|---|---|---|---|
| Bending Strength (MPa) | 117.3 | 89.8 | 106.9 |
| Izod Impact Resistance Value (with notches) (J/m) | 11.2 | 5.2 | 8.7 |

As shown in Table 1, the polycarbonate composite material in Example 7, which is blended with the Wollastonite carrying carbon nanotubes according to the invention shows higher bending strength and an Izod impact resistance value as compared with those in Comparative Examples 2 and 3.

### <Preparation and evaluation of granular carbon nanotubes>

### (Example 8)

To 500 g of Wollastonite (average fiber diameter; 5 µm, average fiber length: 50 µm), 10.0 L of water was added and sufficiently stirred to produce a dispersion slurry.
To 2.5 L of water, 135 g of nickel nitrate (guaranteed reagent) was added and dissolved. To the solution, 35 g of ammonium molybdate (guaranteed reagent) was added and dissolved. The solution (catalyst solution) was added to the slurry.

The slurry was stirred for 1 hour, left at rest, and then washed with water five times by a decantation method, and filtrated.
The obtained cake was dried at 120°C for 12 hours, crushed in a mortar to give about 490 g of Wollastonite carrying the catalyst.

0.5 g of the obtained Wollastonite carrying the catalyst was put in the vessel 1 made of stainless steel mesh in the apparatus shown in Fig. 1, and allowed carbon nanotubes (CNTs) to generate on the surface of the Wollastonite. The upper face, lower face and surrounding side face of the vessel 1 were formed of stainless steel mesh, and stainless steel plates 2 and 3 with holes were arranged to the lower side and upper side, respectively. Under the stainless steel plate 2, the burner 4 was arranged to expose the Wollastonite carrying the catalyst in the vessel 1 to the flame 5 from the burner 4.

The vessel 1, stainless steel plates 2 and 3 were inserted in the stainless steel pipe 6.
To the burner 4, ethylene 1.7 L/min and air 10 L/min were fed to expose the Wollastonite carrying the catalyst to the flame 5 from the burner 4 for 10 minutes, and then the gas fed to the burner 4 was replaced by nitrogen gas 10 L/min to cool the system for 2 minutes. 4 g of a product was obtained, which had the specific volume of 100 ml/g.

The above Example was repeated five times to produce 18.6 g of Wollastonite carrying carbon nanotubes having a specific volume of 100 ml/g, which was put in a 2-litter beaker with 2 L of water and stirred about 10 minutes to prepare slurry. The slurry was filtrated with a Nutsche funnel, which was compressed with a medicine spoon to accelerate the removal of water. The weight of the obtained water-containing cake was 300 g.

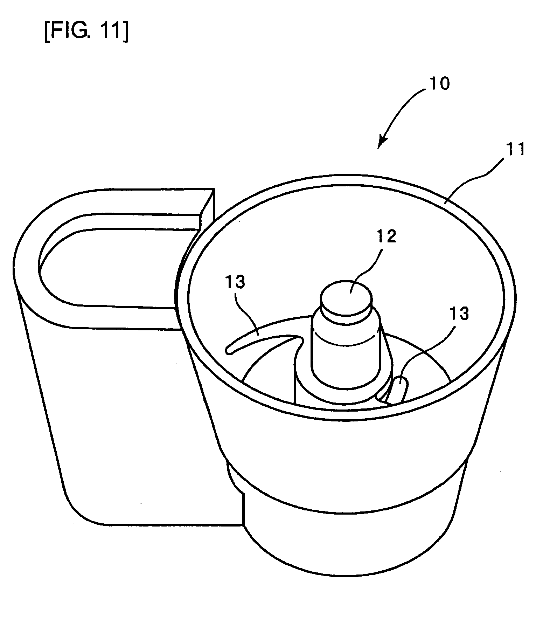

The water-containing cake was put in a slicer used for slicing vegetables and the like shown in Fig. 11, and segmentalized into a granular shape by applying shear force. The product of a granular shape was taken out, dried at 120°C for 12 hours to give 18.0 g of granular carbon nanotubes. The granular carbon nanotubes had a specific volume of 20 ml/g.
Meanwhile, the slicer used was provided with the rotary shaft 12 in the vessel 11, and, to the rotary shaft 12, the cutter blade 13 was attached on the upper and lower sides, as shown in Fig. 11.

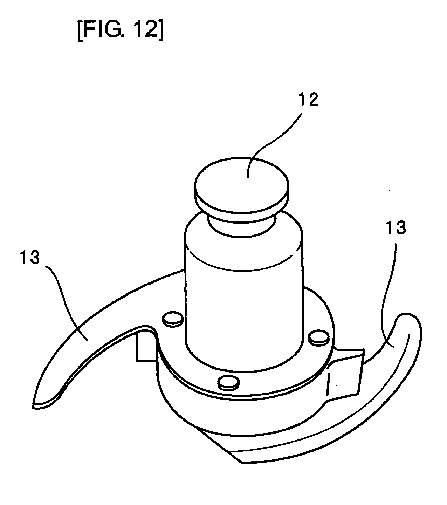

Fig. 12 is a perspective view showing cutter blades 13 attached to the rotary shaft 12. As shown in Fig. 12, two cutter blades 13 are attached to the rotary shaft 12 at an upper portion and a lower portion with a certain interval. As the result of the rotation of the rotary shaft 12, the water-containing cake can be segmentalized by shear force applied by the cutter blades 13.

Fig. 10 is a scanning electron microscopic picture showing the obtained granular carbon nanotube.
As shown in Fig. 10, Wollastonites carrying carbon nanotubes agglomerate to form a granule.

### (Example 9)

The Wollastonite carrying carbon nanotubes used in Example 8 and paraffin were collected in a beaker of 300 ml. The beaker was heated to 65°C in a hot water bath to heat and melt the paraffin while stirring the system with a spatula to give slurry formed by dispersing the granular carbon nanotubes in the molten paraffin.

Meanwhile, the weight ratio of the Wollastonite carrying carbon nanotubes relative to the paraffin (Wollastonite carrying carbon nanotubes: paraffin) was varied so as to give 1.8: 58.2, 3.0: 57.0 or 4.2: 55.8. That is, the Wollastonite carrying carbon nanotubes was blended so as to give the content of 3% by weight, 5% by weight or 7% by weight in paraffin.

The above described slurry containing heated and molten paraffin was poured into a mold having a diameter of 50 mm and a thickness of 3 mm, which was cooled and solidified to mold a disc-shaped paraffin - carbon nanotube composite material.
The surface resistivity of the obtained disk-shaped paraffin - carbon nanotube composite material was measured with a LORESTA (manufactured by Mitsubishi Petrochemical). Table 2 shows the measurement result.
"CNT content" in Table 2 means the content of carbon nanotubes.

### (Example 10)

The granular carbon nanotubes produced in Example 8 and paraffin were put in a laboplast mill (manufactured by Toyo Seiki Seisaku-Sho) so as to give the same ratio as that in Example 9, which was stirred at 62°C and at 50 rpm to prepare a slurry containing heated and molten paraffin.
The obtained slurry was used to produce a disc-shaped paraffin - tabular carbon nanotube composite material in the same manner as that in Example 9. The surface resistivity was measured in the same manner as that in Example 9. Table 2 shows the measurement results.

### (Comparative Example 4)

Commercially available carbon nanotubes manufactured by CNT in South Korea (specific volume: 30 ml/g) and paraffin were heated and molten in a manner substantially similar to that in Example 9 to prepare slurry. The slurry was used to produce a disc-shaped paraffin - carbon nanotube composite material in a manner substantially similar to that in Example 9. The surface resistivity of the disc-shaped composite material was measured in the same manner as above. Table 2 shows the measurement results.

**Table 2**

| | Surface Resistivity Ω/□ | | |
|---|---|---|---|
| CNT Content | Ex. 9 | Ex. 10 | Comp. Ex. 4 |
| 3% by weight | 3.75×10³ | 6.05×10³ | 5.41×10⁶ |
| 5% by weight | 7.07×10² | 4.94×10² | 8.30×10² |
| 7% by weight | 1.00×10² | 4.51×10¹ | 8.55×10¹ |

As shown in Table 2, it is understood that the incorporation of the Wollastonite carrying carbon nanotubes or the granular carbon nanotubes according to the invention in paraffin can give an electroconductivity, which is larger than or equal to that given by using commercially available carbon nanotubes.

### (Example 11)

4 g of the aforementioned granular carbon nanotubes and 56 g of a polycarbonate resin (trade name: E2000; manufactured by Mitsubishi Engineering-Plastics) were thrown into a laboplast mill (manufactured by Toyo Seiki Seisaku-Sho) to be molten and kneaded at a temperature of 260°C and at a rotation speed of 50 rpm.
1.5 g of the obtained polycarbonate resin composition was molded into sheet of 100 × 100 × 0.1 mm³ by vacuum press molding, and the surface resistivity thereof was measured to give 3.39 × 10³ Ω/□.

## Claims

1. A metal oxide particle carrying carbon nanotubes, wherein an acicular or tabular crystalline metal oxide particle carries carbon nanotubes on the surface, the nanotubes being grown in parallel with one another in an approximately perpendicular direction to the surface.

2. The metal oxide particle carrying carbon nanotubes according to claim 1, wherein the carried carbon nanotubes have a length in the range from 1 µm to 500 µm in the approximately vertical direction relative to the surface of the metal oxide particle.

3. The metal oxide particle carrying carbon nanotubes according to claim 1 or 2, wherein the metal oxide particle is a particle of alkali earth metal silicate, alkali earth metal titanate, or alkali titanate.

4. The metal oxide particle carrying carbon nanotubes according to claim 1 or 2, wherein the metal oxide particle is a particle of Wollastonite.

5. A method for manufacturing the metal oxide particle carrying carbon nanotubes described in any one of claims 1 - 4, comprising the steps of:
contacting a solution containing a metal ion to be a catalyst for generating carbon nanotubes to an acicular or tabular crystalline metal oxide particle to adhere the catalyst to the surface of the metal oxide particle, and
contacting hydrocarbon and/or carbon monoxide to the metal oxide particle to which the catalyst has been adhered while heating the particle to 500°C to 1000°C to generate and grow carbon nanotubes on the surface of the metal oxide particle.

6. The method for manufacturing the metal oxide particle carrying carbon nanotubes according to claim 5, wherein the metal oxide particle is heated by the combustion of a gas containing hydrocarbon and oxygen, and the particle is contacted with hydrocarbon and/or carbon monoxide at the same time to generate and grow carbon nanotubes on the surface of the metal oxide particle.

7. The method for manufacturing the metal oxide particle carrying carbon nanotubes according to claim 5 or 6, wherein the solution containing the metal ion to be a catalyst for generating carbon nanotubes comprises at least one element selected from Cr, Mn, Fe, Co, Ni, Cu, Zn, In, Sn, Al and Pt, and Mo element, wherein the at least one element selected from Cr, Mn, Fe, Co, Ni, Cu, Zn, In, Sn, Al and Pt is contained in a range from 0.1 to 1000 mol relative to 1 mol of Mo element.

8. A resin composition comprising the metal oxide particle carrying carbon nanotubes described in any one of claims 1 - 4.

9. A granular carbon nanotube produced by granulating the metal oxide particle carrying carbon nanotubes described in any one of claims 1 - 4 using no binder.

10. A method for manufacturing the granular carbon nanotubes described in claim 9 comprising the steps of:
preparing a water-containing cake of the metal oxide particle carrying carbon nanotubes described in any one of claims 1 - 4,
segmentalizing the water-containing cake while applying shear force to produce a granular material, and
drying the granular material.

11. A resin composition comprising the granular carbon nanotubes described in claim 9.
